# EUROPÄISCHE PATENTSCHRIFT

(11) **EP 2 064 466 B1**
(45) Veröffentlichungstag und Bekanntmachung des Hinweises auf die Patenterteilung: **16.01.2013**
(21) Anmeldenummer: 07764403.7
(22) Anmeldetag: 22.06.2007
(51) Int. Cl.: F16J 15/08

(54) **ZYLINDERKOPFDICHTUNG**
CYLINDER HEAD GASKET
JOINT DE CULASSE

(30) Priorität: 20.09.2006 DE 102006044098
(43) Veröffentlichungstag der Anmeldung: 03.06.2009
(73) Patentinhaber: Federal-Mogul Sealing Systems GmbH, 57562 Herdorf (DE)
(72) Erfinder: SCHMITT, Klaus, 57520 Grünebach (DE)
(86) Internationale Anmeldenummer: PCT/DE2007/001106
(87) Internationale Veröffentlichungsnummer: WO 2008/034401

(56) Entgegenhaltungen:
- DE-A1- 3 633 988
- DE-C1- 19 625 491
- GB-A- 931 710

## Beschreibung

Die Erfindung betrifft eine Zylinderkopfdichtung, insbesondere einsetzbar für Brennkraftmaschinen.

Zylinderkopfdichtungen werden vielfach aus Federstahl hergestellt. Abstützelemente und so genannte Stopperelemente werden in erster Linie mit zusätzlichen Werkstoffen realisiert, so dass die zum Einsatz gelangenden Dichtungen größten Teils aus mehreren Lagen gebildet sind.

In der gattungsbildenden, DE-C 36 33 988 wird ein Verfahren zur Herstellung einer Metalldichtung beschrieben, bei dem auf ein Substrat aus Hartmetall beidseitig Deckschichten aufgebracht werden, die aus Kupfer, einer Legierung auf Basis von Kupfer, Aluminium oder einer Legierung auf Basis von Aluminium bestehen. Die Deckschichten werden nach der Aufbringung einer Wärmebehandlung bei einer Temperatur im Bereich von 350 bis 500° C unterzogen.

Der Erfindung liegt die Aufgabe zugrunde, eine Zylinderkopfdichtung bereit zu stellen, bei welcher, aufbauend auf dem vorbekannten Stand der Technik, die Materialeigenschaften noch besser ausgenutzt werden können und der Arbeitsablauf zur Erzeugung der Zylinderkopfdichtung vereinfacht ist.

Diese Aufgabe wird gelöst durch eine Zylinderkopfdichtung, bestehend aus mindestens zwei fest miteinander verbundenen Blechen unterschiedlicher Werkstoffeigenschaften, von denen das eine Blech aus einem weichen verformbaren Werkstoff besteht und das andere Blech Federeigenschaften besitzt, wobei der Materialverbund mit Durchgangsöffnungen, Mediendurchgangslöchern, Schraubendurchgangslöchem oder dergleichen Ausnehmungen sowie Prägebereichen versehen ist, dergestalt, dass an vorgebbaren Stellen des Materialverbundes erste Prägebereiche gegeben sind, die mit im Wesentlichen vollständiger Dicke beider Bleche vorgesehen und an anderen Stellen im verformbaren Blech und/oder dem Federeigenschaften aufweisenden Blech Blechdicken reduzierende weitere Prägebereiche eingebracht sind.
Vorteilhafte Weiterbildungen der erfindungsgemäßen Zylinderkopfdichtung sind den zugehörigen Unteransprüchen zu entnehmen.

In Analogie zum Stand der Technik wird die Zylinderkopfdichtung durch Plattieren, insbesondere Walzplattieren, eines aus Federstahl bestehenden Bleches mit mindestens einen Blech aus Aluminium, Kupfer, Zinn, Messing oder einer Legierung aus diesem Werkstoffen herbeigeführt.

Durch gezielte Prägung ist es nun möglich, erste Prägebereiche zu generieren, bei welchen die ursprünglichen Werkstoffdicken der miteinander verbundenen Bleche erhalten bleiben. Dies ist besonders dort sinnfällig, wo Abstützelemente, wie Sicken oder Stopperelemente, zum Einsatz gelangen.

In den übrigen Bereichen können weitere Prägestellen gebildet werden, die vorteilhafterweise ausschließlich im weicheren verformbaren Blech eingebracht sind, so dass hier ein gegenüber dem Ursprungszustand Dicken reduzierter Bereich gegeben ist. Ebenfalls denkbar ist es jedoch auch Prägebereiche sowohl in dem einen als auch dem anderen Blech, bzw. in beiden Blechen einzubringen.

Bevorzugt zum Einsatz gelangen Bleche aus Federstählen, die mit mindesten einem Aluminiumblech durch Walzplattierung verbunden werden und in einem Arbeitsgang anschließend umgeformt geprägt und ausgeschnitten werden können.

Je nach Anwendungsfall kann es sinnvoll sein, das Federstahlblech an beiden Flächen durch Walzplattieren mit Aluminiumblechen zu versehen.

Gegenüber dem Stand der Technik werden die Funktionseigenschaften verbessert, da an gezielten Stellen, wie den bereits genannten Abstütz- und Stopperelementen, die konkreten Werkstoffeigenschaften in positiver Weise besonders ausgenutzt werden können.

Der Erfindungsgegenstand in anhand eines Ausführungsbeispiels in der Zeichnung dargestellt und wird wie folgt beschrieben. Es zeigen:
- Figur 1: Prinzipskizze einer Zylinderkopfdichtung;
- Figur 2: Schnitt durch die Zylinderkopfdichtung gemäß Figur 1.

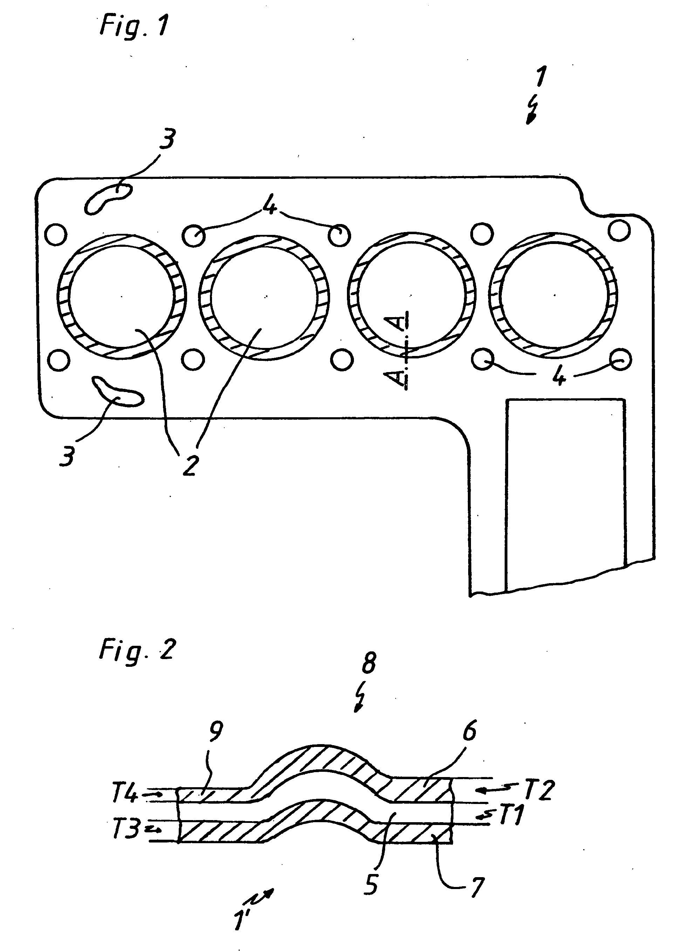

Figur 1 zeigt eine Zylinderkopfdichtung 1, wie sie beispielsweise in einer Brennkraftmaschine einsetzbar ist. Erkennbar sind Brennraumdurchgangsöffnungen 2, Mediendurchgangslöcher 3 sowie Schraubendurchgangslöcher 4.

Figur 2 zeigt einen Schnitt gemäß der Linie A-A der Figur 1. Die Zylinderkopfdichtung 1 wird in diesem Beispiel gebildet aus drei durch Walzplattieren miteinander verbundenen Blechen 5,6,7, wobei das mittlere Blech 5 aus Federstahl und die beiden äußeren Bleche 6,7 aus Aluminium bestehen. Die Blechdicken der Bleche 5-7 des Materialverbundes 1' sind mit T1-T3 angegeben.

Ebenfalls denkbar wäre, auf das eine Aluminiumblech 7 zu verzichten, soweit die Anwendung der Zylinderkopfdichtung 1 dies nicht erforderlich macht.

Die Bleche 6,7 weisen unterschiedliche Blechdicken T2,T3 auf. Der durch Walzplattieren erzeugte Materialverbund 1' wird in einem Arbeitsgang umgeformt, geprägt und ausgeschnitten, um die in Figur 1 dargestellten Lochbilder 2,3,4 zu erzeugen sowie die entsprechende äußere Kontur der Zylinderkopfdichtung 1 einzustellen.

Im Verlauf des Prägens werden im Materialverbund 1' nun erste Prägebereiche in Form von Abstützelementen 8 gebildet, die so vorgesehen sind, dass die ursprüngliche Werkstoffdicke T2 des Aluminiumbleches 6 sowie die ursprüngliche Werkstoffdicke T1 des Federstahlbleches 5 erhalten bleiben und außerhalb dieser Abstützelemente 8 weitere Prägebereiche 9 gebildet werden, die in Dicken reduzierter Weise (T4) nur in das Aluminiumblech 6 eingebracht wurden. Die Werkstoffdicke T3 des Bleches 7 bleibt hierbei im Bereich des gesamten Materialverbundes 1' gleich.

Alternativ besteht natürlich auch die Möglichkeit, zwischen zwei äußeren Federstahlblechen ein mittleres, aus einem weicheren Werkstoff bestehendes Blech vorzusehen, wobei bedarfsweise entweder nur im weicheren Blech oder in zwei, respektive allen Blechen, entsprechende Prägebereiche eingebracht werden.

## Patentansprüche

1. Zylinderkopfdichtung, bestehend aus mindestens zwei fest miteinander verbundenen Blechen (5,6,7) unterschiedlicher Werkstoffeigenschaften, von denen das eine Blech (6,7) aus einem weichen verformbaren Werkstoff besteht und das andere Blech (5) Federeigenschaften besitzt, wobei der Materialverbund (1') mit Durchgangsöffnungen (2), Mediendurchgangslöchern (3), Schraubendurchgangslöchem (4) oder dergleichen Ausnehmungen sowie Prägebereichen (8,9) versehen ist, dergestalt, dass an vorgebbaren Stellen des Materialverbundes (1') erste Prägebereiche (8) gegeben sind, die mit im Wesentlichen vollständiger Dicke (T1,T2) beider Bleche (5,6) vorgesehen und an anderen Stellen im verformbaren Blech (6) und/oder dem Federeigenschaften aufweisenden Blech (5) Blechdicken reduzierende (T4) weitere Prägebereiche (9) eingebracht sind.

2. Zylinderkopfdichtung nach Anspruch 1, **dadurch gekennzeichnet, dass** der Materialverbund (1') durch Walzplattieren erzeugt ist.

3. Zylinderkopfdichtung nach Anspruch 1 oder 2, **dadurch gekennzeichnet, dass** das Federeigenschaften aufweisende Blech (5) aus Federstahl besteht.

4. Zylinderkopfdichtung nach einem der Ansprüche 1 bis 3, **dadurch gekennzeichnet, dass** das verformbare Blech (6,7) aus Aluminium, Kupfer, Zinn, Messing oder einer Legierung aus diesen Werkstoffen besteht.

5. Zylinderkopfdichtung nach einem der Ansprüche 1 bis 4, **dadurch gekennzeichnet, dass** die ersten Prägebereiche (8), Abstützelemente, Stopperelemente oder dergleichen bildend, zumindest im Bereich der als Brennraumdurchgangsöffnung ausgebildeten Durchgangsöffnung (2) eingebracht sind.

6. Zylinderkopfdichtung nach einem der Ansprüche 1 bis 5, **dadurch gekennzeichnet, dass** die ersten Prägebereiche (8), Abstützelemente, Stopperelemente oder dergleichen bildend, im Bereich der jeweiligen Durchgangsöffnung (2) sowie der Mediendurchgangslöcher (3) eingebracht sind.

7. Zylinderkopfdichtung nach einem der Ansprüche 1 bis 6, **dadurch gekennzeichnet, dass** das die Federeigenschaften aufweisende Blech (5) im Bereich beider Flächen mit einem Blech (6,7) aus einem verformbaren Werkstoff verbunden ist.

8. Zylinderkopfdichtung nach einem der Ansprüche 1 bis 7, **dadurch gekennzeichnet, dass** ein Federstahlblech (5) vorgebbarer Blechdicke (T1) zumindest mit einem Aluminiumblech (6) vorgebbarer Dicke (T2) verbunden ist, wobei die aus dem Materialverbund .(1') bestehende Dichtung (1) in einem Arbeitsgang erzeugt erfolgt ist.

9. Zylinderkopfdichtung nach einem der Ansprüche 1 bis 8, **dadurch gekennzeichnet, dass** die Blechdicken reduzierenden (T4) Prägebereiche (9) ausschließlich in dem verformbaren Blech (6,7) eingebracht sind.

## Claims

1. Cylinder head gasket consisting of at least two plates (5, 6, 7) having different material properties which are fixedly connected to one another, of which one plate (6, 7) consists of a soft deformable material and the other plate (5) has resilient properties, wherein the material composite (1') is provided with through-openings (2), media through-holes (3), screw through-holes (4) or similar cut-outs as well as with embossed regions (8, 9), such that there are first embossed regions (8) at specifiable locations of the material composite (1'), which embossed regions (8) are provided with substantially the entire thickness (T1, T2) of the two plates (5, 6), and further embossed regions (9) that reduce the plate thicknesses (T4) are introduced in other locations in the deformable plate (6) and/or the plate (5) having resilient properties.

2. Cylinder head gasket according to claim 1, **characterised in that** the material composite (1') is produced by roll-bonding.

3. Cylinder head gasket according to claim 1 or 2, **characterised in that** the plate (5) having resilient properties consists of spring steel.

4. Cylinder head gasket according to any one of claims 1 to 3, **characterised in that** the deformable plate (6, 7) consists of aluminium, copper, tin, brass or an alloy of those materials.

5. Cylinder head gasket according to any one of claims 1 to 4, **characterised in that** the first embossed regions (8), forming support elements, stopper elements or the like, are introduced at least in the region of the through-opening (2) formed as the combustion chamber through-opening.

6. Cylinder head gasket according to any one of claims 1 to 5, **characterised in that** the first embossed regions (8), forming support elements, stopper elements or the like, are introduced in the region of the respective through-opening (2) and of the media through-holes (3).

7. Cylinder head gasket according to any one of claims 1 to 6, **characterised in that** the plate (5) having resilient properties is connected in the region of both faces to a plate (6, 7) of a deformable material.

8. Cylinder head gasket according to any one of claims 1 to 7, **characterised in that** a spring steel plate (5) of specifiable plate thickness (T1) is connected at least to an aluminium plate (6) of specifiable thickness (T2), wherein the gasket (1) consisting of the material composite (1') is produced in one operation.

9. Cylinder head gasket according to any one of claims 1 to 8, **characterised in that** the embossed regions (9) that reduce the plate thicknesses (T4) are introduced only in the deformable plate (6, 7).

## Revendications

1. Joint de culasse, constitué d'au moins deux tôles (5, 6, 7) fixement assemblées entre elles, ayant des caractéristiques de matériau différentes, dont l'une (6, 7) est constituée d'un matériau tendre déformable et l'autre (5) possède des caractéristiques de ressort, sachant que l'assemblage de matériaux 1') est pourvu d'ouvertures de passage (2), d'orifices de passage de fluides (3), d'orifices de passage de vis (4) ou d'évidements analogues ainsi que de zones embouties (8, 9), de telle sorte que des premières zones embouties (8), qui sont prévues avec l'épaisseur sensiblement totale (T1, T2) des deux tôles (5, 6), sont obtenues en des endroits prédéterminables de l'assemblage de matériaux (1'), et que d'autres zones embouties (9), réduisant (T4) les épaisseurs de tôle, sont pratiquées en d'autres endroits dans la tôle déformable (6) et/ou dans la tôle (5) présentant des caractéristiques de ressort.

2. Joint de culasse selon la revendication 1, **caractérisé en ce que** l'assemblage de matériaux (1') est produit par plaquage par laminage.

3. Joint de culasse selon la revendication 1 ou 2, **caractérisé en ce que** la tôle (5) présentant des caractéristiques de ressort est constituée d'acier à ressorts.

4. Joint de culasse selon l'une des revendications 1 à 3, **caractérisé en ce que** la tôle déformable (6, 7) est constituée d'aluminium, de cuivre, d'étain, de laiton ou d'un alliage de ces matériaux.

5. Joint de culasse selon l'une des revendications 1 à 4, **caractérisé en ce que** les premières zones embouties (8), qui forment des éléments de soutien, des éléments de butée ou analogues, sont pratiquées au moins dans la région de l'ouverture de passage (2) conçue comme ouverture de passage de chambre de combustion.

6. Joint de culasse selon l'une des revendications 1 à 5, **caractérisé en ce que** les premières zones embouties (8), qui forment des éléments de soutien, des éléments de butée ou analogues, sont pratiquées dans la région de l'ouverture de passage respective (2) ainsi que des d'orifices de passage de fluides (3)

7. Joint de culasse selon l'une des revendications 1 à 6, **caractérisé en ce que** la tôle (5) présentant des caractéristiques de ressort est assemblée dans la région des deux faces à une tôle (6, 7) constituée d'un matériau déformable.

8. Joint de culasse selon l'une des revendications 1 à 7, **caractérisé en ce qu'**une tôle d'acier à ressorts (5) d'épaisseur de tôle prédéterminable (T1) est assemblée au moins à une tôle d'aluminium (6) d'épaisseur prédéterminable (T2), sachant que le joint (1) constitué de l'assemblage de matériaux (1') est obtenu en étant fabriqué en une opération.

9. Joint de culasse selon l'une des revendications 1 à 8, **caractérisé en ce que** les zones embouties (9) réduisant (T4) les épaisseurs de tôle sont pratiquées exclusivement dans la tôle déformable (6, 7).
